# EUROPEAN PATENT APPLICATION

(11) **EP 4 819 658 A1**
(43) Date of publication of application: **07.10.2026**
(21) Application number: 24909733.8
(22) Date of filing: 30.07.2024
(51) Int. Cl.: H04W 12/06

(54) **IDENTITY VERIFICATION METHOD AND DEVICE**

(30) Priority: 29.12.2023 CN 202311867677
(71) Applicant: Huawei Technologies Co., Ltd., Shenzhen, Guangdong 518129 (CN)
(72) Inventor: SHI, Xi, Shenzhen, Guangdong 518129 (CN); HU, Xiaokun, Shenzhen, Guangdong 518129 (CN); LIU, Qingming, Shenzhen, Guangdong 518129 (CN)
(74) Representative: MERH-IP Matias Erny Reichl Hoffmann Patentanwälte PartG mbB
(86) International application number: PCT/CN2024/108595
(87) International publication number: WO 2025/138779

(57) **Abstract**

This application provides an identity verification method and an apparatus. In the method, first information and second information are borne in signaling for requesting to verify identity validity of a terminal. A first network element may serve as a conversion function entity to convert the first information used for verifying identity validity in a first network into the second information used for verifying identity validity in a second network, to implement signaling conversion between networks of different standards. An existing EIR equipment may be reused for verifying identity validity of a user equipment, and no new EIR equipment needs to be created, thereby reducing overheads.

## Description

This application claims priority to Chinese Patent Application No. 202311867677.0, filed with the China National Intellectual Property Administration on December 29, 2023, and entitled "IDENTITY VERIFICATION METHOD AND APPARATUS", which is incorporated herein by reference in its entirety.

### TECHNICAL FIELD

This application relates to the field of communication technologies, and in particular, to an identity verification method and an apparatus.

### BACKGROUND

An equipment identity register (equipment identity register, EIR) based on a service-based architecture (service-based architecture, SBA) framework is defined in a communication system. The EIR supports a function of checking an equipment identity status, that is, verifying equipment validity. A 5G-EIR is used as an example in which the 5G-EIR can check whether a permanent equipment identifier (permanent equipment identifier, PEI) is in a blacklist.

However, in networks of different standards, if equipment validity needs to be verified in a communication system, an operator needs to create a new EIR equipment applicable to the networks of different standards, resulting in high overheads.

### SUMMARY

Embodiments of this application provide an identity verification method and an apparatus, so that no new EIR equipment needs to be created when an equipment identity is verified, thereby reducing overheads.

To achieve the foregoing objective, this application uses the following technical solutions.

According to a first aspect, an identity verification method is provided. The method is applied to a first network element, and the method may include: The first network element obtains first information in a process in which a terminal registers with a first network, where the first information is information used for verifying identity validity of the terminal in the first network; the first network element sends second information to a second network element based on the first information, where the second information is information used for verifying identity validity of the terminal in a second network, the first network and the second network are networks of different standards, and the second network element is configured to verify the identity validity of the terminal in the second network; and the first network element obtains an identity validity verification result of the terminal from the second network element.

It can be learned from the method in the first aspect that the first information and the second information are borne in signaling for requesting to verify identity validity of the terminal. The first network element may serve as a conversion function entity to convert the first information used for verifying the identity validity in the first network into the second information used for verifying the identity validity in the second network, to implement signaling conversion between networks of different standards. An existing EIR equipment may be reused for verifying identity validity of a user equipment, and no new EIR equipment needs to be created, thereby reducing overheads.

Optionally, the first network may include a 5G network, and the second network may include a 2/3G network or a 4G network. In other words, in a 5G standalone phase, a 2/3G network device or a 4G network device may be used for verifying the identity validity of the user equipment, and no new 5G-EIR equipment needs to be created, thereby reducing overheads.

In a possible design solution, the first information may include at least one of the following of the terminal: a first equipment identity or a first user identity, the first equipment identity is used for verifying equipment validity of the terminal in the first network, and the first user identity is used for verifying identity validity of a user who uses the terminal in the first network.

It may be understood that the first equipment identity and the first user identity are applicable to the first network. The first equipment identity may include a permanent equipment identifier PEI, that is, information that can uniquely identify the terminal in a 5G system. The first user identity may include a subscription permanent identifier SUPI, that is, information that can uniquely identify the user of the terminal in the 5G system. The first equipment identity and/or the first user identity may be used for verifying identity validity of the terminal in the 5G network, to avoid an error in a verification result.

In a possible design solution, the second information may include at least one of the following of the terminal: a second equipment identity or a second user identity, the second equipment identity is used for verifying equipment validity of the terminal in the second network, and the second user identity is used for verifying identity validity of the user who uses the terminal in the second network.

It may be understood that the second equipment identity and the second user identity are applicable to the second network. The second equipment identity may include an international mobile equipment identity IMEI or terminal information, that is, information that can uniquely identify the terminal in the 2/3G network or the 4G network. The first user identity may include user information or an international mobile subscriber identity IMSI, that is, information that can uniquely identify the user of the terminal in the 2/3G network or the 4G network. It can be learned that there is a mapping relationship between the second equipment identity and the first equipment identity, and there is a mapping relationship between the second user identity and the first user identity. The signaling conversion between the networks of different standards can be implemented based on a mapping relationship between signaling parameters, thereby avoiding an error occurring during the conversion, and making it impossible to verify the identity validity of the terminal.

Optionally, there is a correspondence between the first information and the second information. It may be understood that there is a mapping relationship between a signaling parameter in the first information and a signaling parameter in the second information, and this facilitates the signaling conversion.

In a possible design solution, the first network element receives the identity validity verification result returned by the second network element based on the second information, where the identity validity verification result is used for representing whether an identity of the terminal in the second network is valid. If the identity of the terminal in the second network is valid, an identity of the terminal in the first network is also valid; or if the identity of the terminal in the second network is not valid, an identity of the terminal in the first network is not valid.

It may be understood that the identity validity verification result returned based on the second information is applicable to the second network, and the identity validity of the terminal in the first network is consistent with that in the second network. Therefore, the identity validity of the terminal may be verified by using the second network element in the second network, and the verification result is applied to the first network, so that the terminal registers with the first network.

In a possible design solution, the first network element receives the first information from a third network element, where the third network element may be a network element in the first network. Correspondingly, the identity verification method may further include: The first network element sends, to the third network element, information indicating whether the identity of the terminal in the first network is valid.

It may be understood that the third network element may be an access and mobility management function (access and mobility management function, AMF network element). The first network element receives, from the AMF network element, information for requesting to verify the identity validity of the terminal in the first network, and after obtaining the identity validity verification result applicable to the second network, converts the identity validity verification result into information applicable to the first network, so that the terminal can register with the first network without participation of a device that verifies the identity validity in the first network, thereby reducing overheads.

Optionally, the identity validity verification result further indicates equipment status information of the terminal, and the equipment status information may include that the terminal is in a whitelist, the terminal is in a blacklist, or the terminal is in a greylist. It may be understood that, if the equipment status information includes that the terminal is in the whitelist, the identity validity verification result indicates that the identity of the terminal is valid; or if the equipment status information includes that the terminal is in the blacklist or the terminal is in the greylist, the identity validity verification result indicates that the identity of the terminal is suspicious or not valid. In this way, whether the terminal is allowed to register with the first network is determined based on the equipment status information, thereby improving security of terminal registration.

Optionally, the first information is borne in signaling on a 5G equipment identity register equipment interface, and the second information is borne in signaling on a 2/3G equipment identity register equipment interface or signaling on a 4G equipment identity register equipment interface. It may be understood that the second network element may be a 2/3G or 4G EIR equipment, and the second information is borne in the signaling on the 2/3G or 4G EIR equipment interface. Conversion between the signaling on the 5G-EIR equipment interface and the signaling on the 2/3G or 4G EIR equipment interface is performed, to verify the identity validity of the user equipment, so that no new 5G-EIR equipment needs to be created, thereby reducing overheads.

According to a second aspect, an identity verification method is provided. The method is applied to a second network element, and the method includes: In a process in which a terminal registers with a first network, the second network element receives second information sent by a first network element based on first information, where the first information is information used for verifying identity validity of the terminal in the first network, the second information is information used for verifying identity validity of the terminal in a second network, and the first network and the second network are networks of different standards; the second network element verifies the identity validity of the terminal in the second network based on the second information; and the second network element sends an identity validity verification result of the terminal to the first network element.

It may be understood that, for related technical effects of the method in the second aspect, refer to the related descriptions of the first aspect. Details are not described herein again.

According to a third aspect, a communication apparatus is provided. The communication apparatus includes a module configured to perform the method according to either of the first aspect and the second aspect, for example, a transceiver module and a processing module. For example, the transceiver module indicates receiving and sending functions of the communication apparatus, and the processing module is configured to perform a function of the communication apparatus other than the receiving and sending functions.

Optionally, the transceiver module may include a sending module and a receiving module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus can perform the method according to either of the first aspect and the second aspect.

It may be understood that the communication apparatus according to the third aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the third aspect, refer to the technical effects of the first aspect. Details are not described herein again.

According to a fourth aspect, a communication apparatus is provided. The communication apparatus includes a processor, and the processor is configured to perform the method according to either of the first aspect and the second aspect.

In a possible design solution, the communication apparatus according to the fourth aspect may further include a transceiver. The transceiver may be a transceiver circuit or an interface circuit. The transceiver may be used by the communication apparatus according to the fourth aspect to communicate with another communication apparatus.

In a possible design solution, the communication apparatus according to the fourth aspect may further include a memory. The memory may be integrated with the processor, or may be disposed separately from the processor. The memory may be configured to store a computer program and/or data in the method according to either of the first aspect and the second aspect.

In embodiments of this application, the communication apparatus according to the fourth aspect may be the terminal or the network device according to either of the first aspect and the second aspect, a chip (system) or another part or component that may be disposed in the terminal or the network device, or an apparatus that includes the terminal or the network device.

In addition, for technical effects of the communication apparatus according to the fourth aspect, refer to the technical effects of the method according to either of the first aspect and the second aspect. Details are not described herein again.

According to a fifth aspect, a communication apparatus is provided. The communication apparatus includes a processor. The processor is coupled to a memory. The processor is configured to execute a computer program stored in the memory, to enable the communication apparatus to perform the method according to either of the first aspect and the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In embodiments of this application, the communication apparatus according to the fifth aspect may be the terminal or the network device according to either of the first aspect and the second aspect, a chip (system) or another part or component that may be disposed in the terminal or the network device, or an apparatus that includes the terminal or the network device.

In addition, for technical effects of the communication apparatus according to the fifth aspect, refer to the technical effects of the method according to the first aspect. Details are not described herein again.

According to a sixth aspect, a communication apparatus is provided, including a processor and a memory. The memory is configured to store a computer program, and when the processor executes the computer program, the communication apparatus is enabled to perform the method according to either of the first aspect and the second aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In embodiments of this application, the communication apparatus according to the sixth aspect may be the terminal or the network device according to either of the first aspect and the second aspect, a chip (system) or another part or component that may be disposed in the terminal or the network device, or an apparatus that includes the terminal or the network device.

In addition, for technical effects of the communication apparatus according to the sixth aspect, refer to the technical effects of the method according to either of the first aspect and the second aspect. Details are not described herein again.

According to a seventh aspect, a communication system is provided. The communication system includes a first network element configured to perform the method according to the first aspect, and a second network element configured to perform the method according to the second aspect.

According to an eighth aspect, a computer-readable storage medium is provided, including a computer program or instructions. When the computer program or the instructions are run on a computer, the computer is enabled to perform the method according to either of the first aspect and the second aspect.

According to a ninth aspect, a computer program product is provided, including a computer program or instructions. When the computer program or the instructions are run on a computer, the computer is enabled to perform the method according to either of the first aspect and the second aspect.

### BRIEF DESCRIPTION OF DRAWINGS

FIG. 1 is a diagram of a reference model of a service-based interface N5g-eir;
FIG. 2 is a schematic flowchart of protocol conversion;
FIG. 3 is a diagram 1 of an architecture of a communication system according to an embodiment of this application;
FIG. 4 is a diagram 1 of an identity verification procedure according to an embodiment of this application;
FIG. 5 is a diagram 2 of an architecture of a communication system according to an embodiment of this application;
FIG. 6 is a diagram 2 of an identity verification procedure according to an embodiment of this application;
FIG. 7 is a diagram 3 of an architecture of a communication system according to an embodiment of this application;
FIG. 8 is a diagram 3 of an identity verification procedure according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

### DESCRIPTION OF EMBODIMENTS

In a 5th generation (5th generation, 5G) communication system, an EIR based on an SBA framework, that is, a 5G-EIR, is defined, and a service-based interface N5g-eir is provided. The 5G-EIR is an optional network function that can support checking an equipment identity status, for example, whether a permanent equipment identifier (PEI) is in a blacklist (prohibition list).

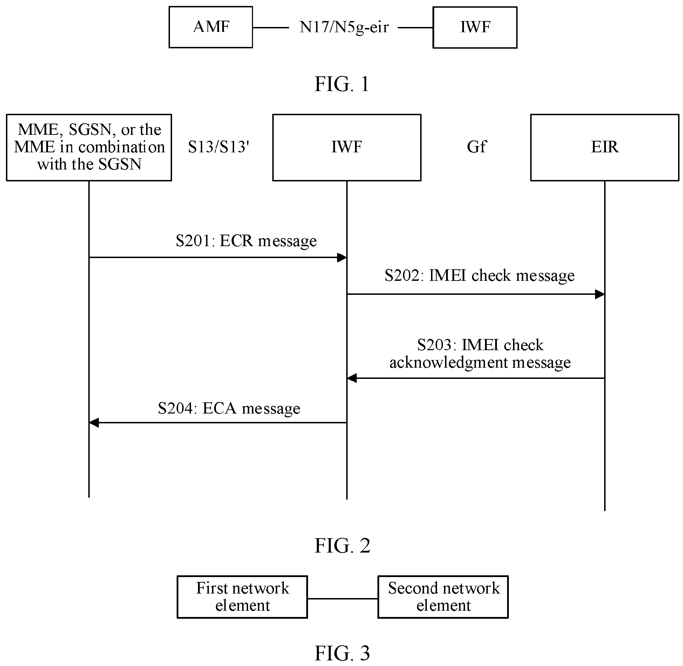

FIG. 1 is a diagram of a reference model of a service-based interface N5g-eir. As shown in FIG. 1, N17 is a reference point for an AMF network element and a 5G-EIR equipment, and N5g-eir is a 5G-EIR service-based interface. For details, refer to related definitions in 3GPP. The AMF network element interacts with an interworking function (interworking function, IWF) via the reference point N17 or the service-based interface N5g-eir.

For a scenario of verifying an international mobile equipment identity (international mobile equipment identity, IMEI), it is defined in 3GPP that the interworking function (interworking function, IWF) supports protocol conversion between a mobile application part (mobile application part, MAP) protocol and a Diameter (Diameter) protocol. FIG. 2 is a schematic flowchart of protocol conversion.

As shown in FIG. 2, a procedure of the protocol conversion may include S201 to S204.

S201: An MME network element, an SGSN network element, or the MME network element in combination with the SGSN network element send an ECR message to an IWF network element.

S13 is an interface between the mobility management entity (mobility management entity, MME) network element and an EIR, and the EIR and the MME network element may be directly connected through the S13 interface. S13' is a reference point between the serving GPRS support node (serving GPRS support node, SGSN) network element and the EIR equipment. A Diameter protocol is used for the S13/S13' interface. Specifically, the S13/S13' interface is mapped to mobile equipment identity check request (ME-Identity-Check-Request, ECR) signaling or mobile equipment identity check answer (ME-Identity-Check-Answer, ECA) signaling in a specified Diameter application program, where the ECR signaling is used for requesting to verify identity validity of a mobile equipment, and the ECA signaling is a response message of the ECR signaling. The MME network element is mainly responsible for functions such as mobility management, bearer management, user authentication, and serving gateway (serving gateway, SGW) selection. The EIR may be used for verifying an equipment identity of a terminal, to determine equipment validity of the terminal, thereby ensuring network security.

S202: The IWF network element sends an IMEI check message to the EIR.

The IMEI check message is a Check IMEI message. The IWF network element converts the ECR message into the Check IMEI message and sends the Check IMEI message to the EIR equipment. Gf is an interface between the SGSN network element and the EIR, and the MAP protocol is used for the Gf interface. Equipment identity check signaling in the MAP protocol (MAP_CHECK_IMEI service) is used by the SGSN to request the EIR to check an IMEI. That is, an MAP operation corresponding to the MAP_CHECK_IMEI service is checking the IMEI (Check IMEI).

S203: The EIR sends an IMEI check acknowledgment message to the IWF network element.

The IMEI check acknowledgment message is a Check IMEI ACK message.

S204: The IWF network element sends an ECA message to the MME network element, the SGSN network element, or the MME network element in combination with the SGSN network element.

The IWF network element converts the Check IMEI ACK message into the ECA message, and sends the ECA message to the MME network element, the SGSN network element, or the MME network element in combination with the SGSN network element.

In a 5G network phase, in an operator network, a 5G-EIR equipment needs to be created and IMEIs of inventory users need to be migrated to the 5G-EIR equipment, resulting in high overheads. In addition, a mapping relationship between parameters of the ECR/ECA signaling on the S13/S13' interface and equipment identity check signaling on an N5g-eir interface (N5g-eir_Equipment Identity Check) is not provided, and a mapping relationship between parameters of the check IMEI/check IMEI_ACK signaling on the Gf interface and the N5g-eir_Equipment Identity Check signaling on the N5g-eir interface is also not provided.

For the foregoing technical problems, embodiments of this application provide the following technical solutions.

The following describes the technical solutions of this application with reference to accompanying drawings.

The technical solutions in embodiments of this application may be applied to various communication systems, for example, a wireless network (Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system, a worldwide interoperability for microwave access (worldwide interoperability for microwave access, WiMAX) communication system, and 5th generation (5th generation, 5G) system, for example, a new radio (new radio, NR) system.

In embodiments of this application, "indication" may include a direct indication and an indirect indication, or may include an explicit indication and an implicit indication. Information indicated by a piece of information (for example, the following first indication information, second indication information, or third indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, common parts of all pieces of information may be further identified and then indicated together, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

It should be understood that, the to-be-indicated information may be sent as a whole, or may be divided into a plurality of pieces of sub-information for separate sending. In addition, sending periodicities and/or sending occasions of the sub-information may be the same or different. A specific sending method is not limited in embodiments of this application. The sending periodicities and/or the sending occasions of the sub-information may be predefined, for example, predefined according to a protocol, or may be configured by a transmit end device by sending the configuration information to a receive end device.

"Predefinition" or "pre-configuration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in embodiments in this application.

The "protocol" in embodiments of this application may be a protocol family in the communication field, a standard protocol with a frame structure similar to a protocol family, or a related protocol applied to a future communication system. This is not specifically limited in embodiments of this application.

In embodiments of this application, descriptions such as "when ...", "in a case of ...", and "if" all mean that a device performs corresponding processing in a specific objective situation, and are not intended to limit time. The descriptions do not mean that the device is required to have a determining action during implementation, and do not mean any other limitation.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system shown in FIG. 3 is first used as an example to describe in detail a communication system applicable to embodiments of this application. For example, FIG. 3 is a diagram 1 of an architecture of a communication system applicable to a method according to an embodiment of this application.

As shown in FIG. 3, the communication system may include a first network element and a second network element. The first network element may be a network element that has a function of signaling conversion between networks of different standards, for example, the foregoing IWF network element. The second network element may be a network function or entity that supports verification of an identity status of a terminal, for example, an EIR in a 2/3G network or an EIR equipment in a 4G network.

The communication system may further include a third network element, and the third network element may be an AMF network element. The AMF network element is mainly responsible for access management in a wireless network, for example, user access, user location update, user registration with a network, and cell handover. This embodiment of this application mainly relates to a function of the user registration with the network.

The terminal may also be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), an internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In the communication system, first information and second information are borne in signaling for requesting to verify identity validity of the terminal. The first network element may serve as a conversion function entity to convert the first information used for verifying identity validity in a first network into the second information used for verifying identity validity in a second network, to implement the signaling conversion between the networks of different standards. An existing EIR equipment may be reused for verifying identity validity of a user equipment, and no new EIR equipment needs to be created, thereby reducing overheads.

A device form of a network device is not limited in embodiments of this application. An apparatus configured to implement a function of the network device may be the network device, or may be an apparatus that can support the network device in implementing the function, for example, a chip system. The apparatus may be mounted in the network device or used in cooperation with the network device. In embodiments of this application, the chip system may include a chip, or may include a chip and another discrete component.

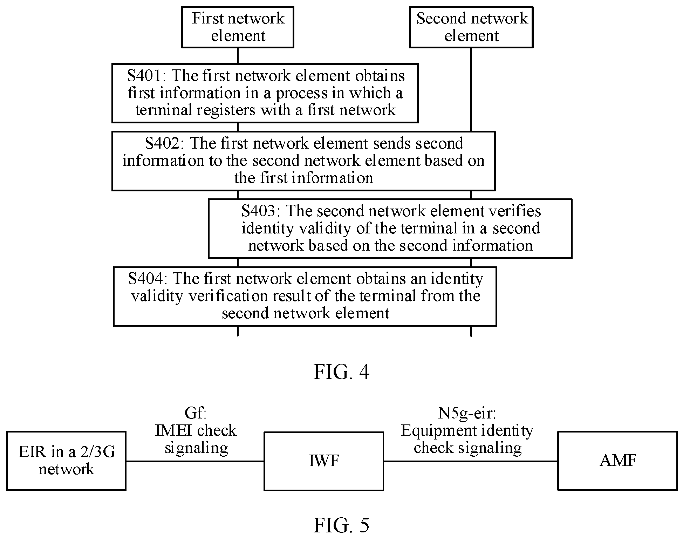

With reference to FIG. 4, the following describes in detail an interaction procedure between network elements/devices in the foregoing communication system by using method embodiments. The identity verification method provided in embodiments of this application is applicable to the foregoing communication system, and is specifically applied to various scenarios/procedures mentioned in the foregoing communication system. The following provides specific descriptions.

FIG. 4 is a schematic flowchart 1 of an identity verification method according to an embodiment of this application. The identity verification method is applicable to the foregoing communication system, and mainly relates to interaction between a first network element and a second network element.

As shown in FIG. 4, a procedure of the identity verification method is as follows:
S401: The first network element obtains first information in a process in which a terminal registers with a first network.

The first network may include a 5G network. In a process in which the terminal registers with the 5G network, identity validity of the terminal in the 5G network needs to be verified based on the first information. The first information may be information used for verifying identity validity of the terminal in the first network. The first information may be information delivered by a higher layer, that is, may be borne in a message (signaling) delivered by the higher layer. The message may be signaling used for requesting to verify the identity validity of the terminal. For example, the first information may be borne in an N5g-eir_Equipment Identity Check message received from an AMF network element, and N5g-eir_Equipment Identity Check signaling is used for requesting to verify the identity validity of the terminal. It can be learned that the first information may be borne in signaling on a service-based interface N5g-eir.

The first network element may be a network element that has a function of signaling conversion between networks of different standards, for example, may be an IWF network element.

S402: The first network element sends second information to the second network element based on the first information.

Correspondingly, the second network element receives the second information sent by the first network element.

The second information may be information used for verifying identity validity of the terminal in a second network. The first network and the second network are networks of different standards. The second network element is configured to verify the identity validity of the terminal in the second network. That is, the second information may be information applicable to the second network. The second network may include a 2/3G network or a 4G network. If the second network is the 2/3G network, the second information may be borne in signaling on a 2/3G equipment identity register equipment interface. That is, the second information may be borne in a Check IMEI message. The Check IMEI message is used for requesting to verify an IMEI of the terminal, and the second network element may be an EIR in the 2/3G network, so that the EIR in the 2/3G network verifies the identity validity of the terminal based on the IMEI of the terminal. If the second network is the 4G network, the second information may be borne in signaling on a 4G equipment identity register equipment interface. That is, the second information may be borne in an ECR message. The ECR message is used for requesting to verify the identity validity of the terminal, and the second network element may be an EIR in the 4G network, so that the EIR in the 4G network verifies the identity validity of the terminal based on the IMEI of the terminal.

It may be understood that, the first information used for verifying the identity validity in the first network is converted into the second information used for verifying the identity validity in the second network, to implement signaling conversion between the networks of different standards. For example, the IWF network element performs conversion between signaling on a 5G-EIR equipment interface and signaling on a 2/3G or 4G EIR equipment interface, that is, converts the N5g-eir_Equipment Identity Check message into the Check IMEI message or the ECR message. In other words, in a 5G standalone phase, a 2/3G network device or a 4G network device may be used for verifying identity validity of a user equipment, so that no new device needs to be created, thereby reducing overheads.

In a possible design solution, the first information may include at least one of the following of the terminal: a first equipment identity or a first user identity, the first equipment identity is used for verifying equipment validity of the terminal in the first network, and the first user identity is used for verifying identity validity of a user who uses the terminal in the first network.

The first equipment identity and the first user identity are applicable to the first network. It may be understood that when the first network is the 5G network, the first equipment identity or the first user identity may be borne in the N5g-eir_Equipment Identity Check message, and the first equipment identity may include a permanent equipment identifier (permanent equipment identifier, PEI), that is, information that can uniquely identify the terminal in a 5G system. The first user identity may include a subscription permanent identifier (subscription permanent identifier, SUPI), and the SUPI herein may be a SUPI corresponding to the terminal, that is, information that can uniquely identify the user of the terminal in the 5G system.

The identity validity of the terminal in the 5G network may be verified by using the first equipment identity and/or the first user identity, to avoid an error in a verification result.

In a possible design solution, the second information may include at least one of the following of the terminal: a second equipment identity or a second user identity, the second equipment identity is used for verifying equipment validity of the terminal in the second network, and the second user identity is used for verifying identity validity of the user who uses the terminal in the second network.

It may be understood that the second equipment identity and the second user identity are applicable to the second network. When the second network is the 2/3G network, the second equipment identity or the first user identity may be borne in the Check IMEI message, the second equipment identity may include an international mobile equipment identity IMEI, that is, information that can uniquely identify the terminal in the 2/3G network, and the first user identity may include user information (USER-INFORMATION), that is, information that can uniquely identify the user who uses the terminal in the 2/3G network. When the second network is the 4G network, the second equipment identity or the first user identity may be borne in the ECR message. The second equipment identity may include terminal information (Terminal-Information), where the Terminal-Information may be a parameter of the ECR message in the 4G network, and is equivalent to IMEI information. The first user identity may include an international mobile subscriber identity (International Mobile Subscriber Identification Number, IMSI), that is, information that can uniquely identify the user who uses the terminal in the 4G network.

It can be learned that there is a mapping relationship between the second equipment identity and the first equipment identity, and there is a mapping relationship between the second user identity and the first user identity. The signaling conversion between the networks of different standards can be implemented based on a mapping relationship between signaling parameters, thereby avoiding an error occurring during the signaling conversion, and making it impossible to verify the identity validity of the terminal.

Optionally, there is a correspondence between the first information and the second information. It may be understood that there is a correspondence between a signaling parameter in the first information and a signaling parameter in the second information. For example, there is a correspondence between the second equipment identity and the first equipment identity, and there is a correspondence between the second user identity and the first user identity.

If the first information includes a field/parameter newly added to the first network, that is, no information element corresponding to the field/parameter exists in the second network, the field/parameter does not need to be converted during signaling conversion. For example, parameters in the N5g-eir_Equipment Identity Check message include a generic public subscription identifier (generic public subscription identifier, GPSI) and supported features (supported-features), but information elements corresponding to the two parameters do not exist in the Check IMEI message or the ECR message, so that conversion is not needed. This facilitates the signaling conversion.

In a possible design solution, the first network element receives an identity validity verification result returned by the second network element based on the second information, where the identity validity verification result is used for representing whether an identity of the terminal in the second network is valid. If the identity of the terminal in the second network is valid, an identity of the terminal in the first network is also valid; or if the identity of the terminal in the second network is not valid, an identity of the terminal in the first network is not valid.

It may be understood that the identity validity verification result returned based on the second information is applicable to the second network. For example, when the second network is the 2/3G network, the identity validity verification result may be borne in an IMEI check acknowledgment (Check IMEI ACK) message. When the second network is the 4G network, the identity validity verification result may be borne in a mobile equipment identity check answer (ECA) message. The identity validity of the terminal in the first network is consistent with that in the second network. Therefore, the identity validity of the terminal may be verified by using the second network element in the second network, and the verification result is applied to the first network. For example, an identity validity verification result applicable to the 2/3G network or the 4G network is applied to the 5G network, so that the terminal registers with the 5G network.

In a possible design solution, the first network element receives the first information from a third network element, where the third network element may be a network element in the first network. Correspondingly, the identity verification method may further include: The first network element sends, to the third network element, information indicating whether the identity of the terminal in the first network is valid.

It may be understood that the third network element may be an AMF network element. The first network element receives, from the AMF network element, information for requesting to verify the identity validity of the terminal in the first network, and after obtaining the identity validity verification result applicable to the second network, converts the identity validity verification result into information applicable to the first network. For example, when the second network is the 2/3G network, the IWF network element converts the Check IMEI ACK message into an equipment identity check response message on an N5g-eir interface (N5g-eir_Equipment Identity Check Response). When the second network is the 4G network, the IWF network element converts the ECA message into the N5g-eir_Equipment Identity Check Response message. In this way, the terminal can register with the first network without participation of a device that verifies the identity validity in the first network, thereby reducing overheads.

Optionally, the identity validity verification result further indicates equipment status information of the terminal, and the equipment status information may include that the terminal is in a whitelist, the terminal is in a blacklist, or the terminal is in a greylist. It may be understood that, if the equipment status information includes that the terminal is in the whitelist, the identity validity verification result indicates that the identity of the terminal is valid; or if the equipment status information includes that the terminal is in the blacklist or the terminal is in the greylist, the identity validity verification result indicates that the identity of the terminal is suspicious or not valid. For example, the equipment status information of the terminal may be a parameter in the Check IMEI ACK message or the ECA message, and the IWF network element converts the equipment status information of the terminal in the Check IMEI ACK message or the ECA message into equipment status information of the terminal in the N5g-eir_Equipment Identity Check Response message. In this way, whether the terminal is allowed to register with the first network is determined based on the equipment status information, thereby improving security of terminal registration.

S403: The second network element verifies the identity validity of the terminal in the second network based on the second information.

S404: The first network element obtains the identity validity verification result of the terminal from the second network element.

A specific implementation principle of S403 and S404 is similar to that of S401 and S402. For understanding, refer to S401 and S402. Details are not described herein again.

In conclusion, the first information and the second information are borne in signaling for requesting to verify the identity validity of the terminal. The first network element may serve as a conversion function entity to convert the first information used for verifying the identity validity in the first network into the second information used for verifying the identity validity in the second network, to implement the signaling conversion between the networks of different standards. An existing EIR equipment may be reused for verifying the identity validity of the user equipment, and no new EIR equipment needs to be created, thereby reducing the overheads.

With reference to FIG. 4, the foregoing describes an overall procedure of the identity verification method provided in embodiments of this application. With reference to FIG. 5 to FIG. 8, the following describes in detail specific procedures of the identity verification method provided in embodiments of this application in various scenarios.

### Scenario 1:

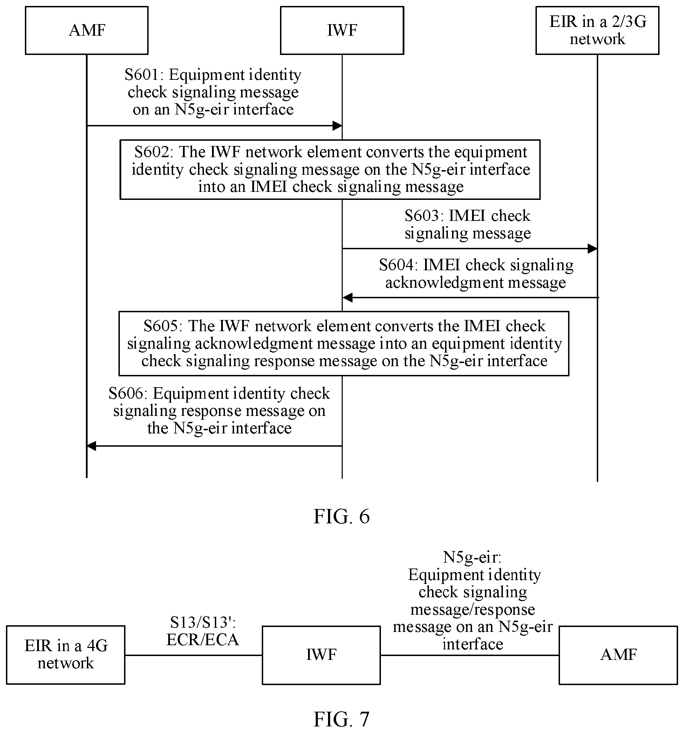

FIG. 5 is a diagram 2 of an architecture of a communication system according to an embodiment of this application, specifically relating to interaction between an IWF network element (namely, the foregoing first network element), an EIR (namely, the foregoing second network element) in a 2/3G network, and an AMF network element (namely, the foregoing third network element). The EIR in the 2/3G network interacts with the IWF network element through a Gf interface, and the IWF network element interacts with the AMF network element through an N5g-eir interface. FIG. 6 is a schematic flowchart 2 of an identity verification method according to an embodiment of this application. The identity verification method is applicable to the foregoing communication system. In the scenario 1, the IWF network element may serve as a conversion function entity to convert first information used for verifying identity validity in a 5G network into second information used for verifying identity validity in a 2/3G network, to implement signaling conversion between networks of different standards. In a 5G standalone phase, a 2/3G network device may be used for verifying identity validity of a user equipment, so that no new device needs to be created, thereby reducing overheads.

Specifically, as shown in FIG. 6, a procedure of the identity verification method is as follows:
S601: The AMF network element sends an equipment identity check signaling message on an N5g-eir interface to an IWF network element, and correspondingly, the IWF network element receives the equipment identity check signaling message on the N5g-eir interface from the AMF network element.

The equipment identity check signaling message on the N5g-eir interface is an N5g-eir_Equipment Identity Check message, may be signaling on the N5g-eir interface, and may be used for requesting to verify identity validity of a terminal.

S602: The IWF network element converts the equipment identity check signaling message on the N5g-eir interface into an IMEI check signaling message.

The IMEI check signaling message is a Check IMEI message, which may be signaling on a 2/3G EIR equipment interface, and may be used for requesting to check validity of an IMEI, so as to verify the identity validity of the terminal. A process of converting the N5g-eir_Equipment Identity Check message into the Check IMEI message relates to a rule of mapping between parameters in the N5g-eir_Equipment Identity Check message and the Check IMEI message, and the rule of mapping between the parameters is shown in Table 1.

**Table 1: Rule of mapping between the parameters**

| Parameter in the N5g-eir_Equipment Identity Check message | Parameter in the Check IMEI message | Descriptions |
|---|---|---|
| PEI | IMEI | IMEI information, which is a mandatory information element |
| SUPI | USER-INFORMATION | Carried at a TCAP session layer |
| GPSI | None | The Check IMEI does not have this information element, and conversion is not performed |
| supported-features | None | The Check IMEI does not have this information element, and conversion is not performed |
| None | Requested Equipment Info | For a value, refer to Equipment Status |
| None | Extension Container | Optional field, which is not carried |

It can be learned that the parameters in the N5g-eir_Equipment Identity Check message may specifically include the PEI, the SUPI, the GPSI, and the supported-features. For specific implementation, refer to related descriptions in S402. Details are not described herein again. The parameters in the Check IMEI message may specifically include the IMEI, the USER-INFORMATION, the requested equipment information (Requested Equipment Info), and the extension container (Extension Container). For specific implementation of the IMEI, refer to related descriptions in S402. Details are not described herein again. The Check IMEI message does not have information elements corresponding to the GPSI and the supported-features. Therefore, the conversion is not needed. The USER-INFORMATION may be carried at the transaction capabilities application part (transaction capabilities application part, TCAP) protocol session layer. For the value of the Requested Equipment Info, refer to a value range of the Equipment Status. The Extension Container is the optional field, and may not be carried in the Check IMEI message.

S603: The IWF network element sends the IMEI check signaling message to the EIR in the 2/3G network.

Correspondingly, the EIR in the 2/3G network receives the Check IMEI message, and verifies the identity validity of the terminal based on the parameters such as the IMEI and the USER-INFORMATION carried in the Check IMEI message. The EIR in the 2/3G network includes an identity validity verification result of the terminal in a Check IMEI ACK message, and sends the Check IMEI ACK message to the IWF network element.

S604: The IWF network element receives an IMEI check signaling acknowledgment message returned by the EIR in the 2/3G network.

The IMEI check signaling acknowledgment message is the Check IMEI ACK message.

S605: The IWF network element converts the IMEI check signaling acknowledgment message into an equipment identity check signaling response message on the N5g-eir interface.

The equipment identity check signaling response message on the N5g-eir interface is an N5g-eir_Equipment Identity Check Response message. The Check IMEI ACK message may be signaling on the 2/3G EIR equipment interface, or may be a response message for the Check IMEI message. A process of converting the Check IMEI ACK message into the N5g-eir_Equipment Identity Check Response message relates to a rule of mapping between parameters in the Check IMEI ACK message and the N5g-eir_Equipment Identity Check Response message, that is, a rule of mapping between response parameters, as shown in Table 2.

**Table 2: Rule of mapping between the response parameters**

| Parameter in the N5g-eir_Equipment Identity Check Response message | Parameter in the Check IMEI ACK message |
|---|---|
| Eir Response Data::=Status: | Equipment Status::= ENUMERATED |
| "WHITELISTED" | White Listed (0) |
| "BLACKLISTED" | Black Listed (1) |
| "GREYLISTED" | Grey Listed (2) |

| Response code | |
|---|---|
| 200 ok | It is considered that the EIR performs processing normally when an Equipment Status information element is carried |
| 404 Not Found ERROR_EQUIPMENT_UNKNOWN | Unknown Equipment |
| 504 Gateway Timeout TARGET_NF_NOT_REACHABLE | MAP_P_ABORT |
| 503 Service Unavailable | MAP_U_ABORT |

It can be learned that, the parameters in the N5g-eir_Equipment Identity Check Response message may specifically include the Eir Response Data::=Status:, the "WHITELISTED", the "BLACKLISTED", and the "GREYLISTED", which may respectively represent equipment status information, a whitelist, a blacklist, and a greylist of the terminal. The parameters in the Check IMEI ACK message may specifically include the Equipment Status::= ENUMERATED, the White Listed (0), the Black Listed (1), and the Grey Listed (2), which may respectively represent the equipment status information, the whitelist, the blacklist, and the greylist of the terminal, and have a correspondence with the parameters in the N5g-eir_Equipment Identity Check Response message. For specific implementation, refer to related descriptions in S402, and details are not described herein again.

In addition, the conversion between the N5g-eir_Equipment Identity Check Response message and the Check IMEI ACK message may further include conversion of the response code. Response code in the N5g-eir_Equipment Identity Check Response message may include: 200 ok, 404 Not Found (ERROR_EQUIPMENT_UNKNOWN), 504 Gateway Timeout (TARGET_NF_NOT_REACHABLE), and 503 Service Unavailable. 200 ok may be a response result of the N5g-eir_Equipment Identity Check Response message, indicating that the 2/3G EIR equipment performs processing normally. If the Check IMEI ACK message carries the Equipment Status information element, it is considered that the EIR performs processing normally. 404 Not Found indicates an unknown equipment error. That is, a corresponding 2/3G EIR equipment is not found and the 2/3G EIR equipment does not respond. In the Check IMEI ACK message, a parameter corresponding to 404 Not Found is the Unknown Equipment. 504 Gateway Timeout indicates that a request times out. That is, the 2/3G EIR equipment does not respond to an error in time. In the Check IMEI ACK message, a parameter corresponding to 404 Not Found is the MAP_P_ABORT. 503 Service Unavailable indicates that the 2/3G EIR equipment cannot be accessed, and this error may be caused by system resource limitation, network congestion, a shutdown state of the 2/3G EIR equipment, or the like. In the Check IMEI ACK message, a parameter corresponding to 503 Service Unavailable is the MAP_U_ABORT, indicating that an abnormal process is terminated due to a mobile application part protocol.

S606: The IWF network element sends, to the AMF network element, the equipment identity check signaling response message on the N5g-eir interface.

Correspondingly, the AMF network element receives the N5g-eir_Equipment Identity Check Response message, that is, receives the identity validity verification result of the terminal, to register the terminal with the 5G network.

It may be understood that, the IWF network element may serve as the conversion function entity to convert the first information used for verifying the identity validity in the 5G network into the second information used for verifying the identity validity in the 2/3G network, to implement the signaling conversion between the networks of different standards. In the 5G standalone phase, the 2/3G network device may be used for verifying the identity validity of the user equipment, so that no new device needs to be created, thereby reducing the overheads.

### Scenario 2:

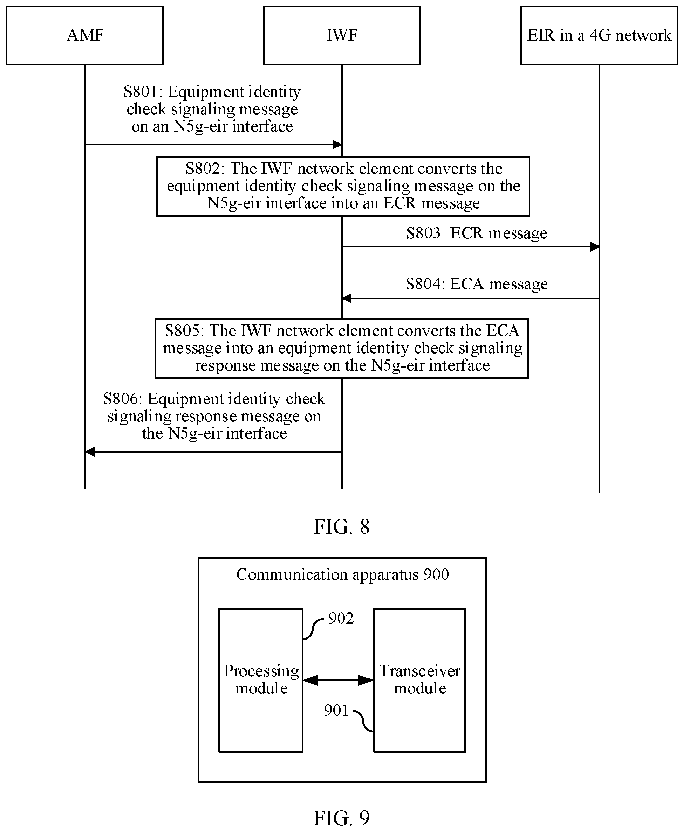

FIG. 7 is a diagram 3 of an architecture of a communication system according to an embodiment of this application, specifically relating to interaction between an IWF network element (namely, the foregoing first network element), an EIR (namely, the foregoing second network element) in a 4G network, and an AMF network element (namely, the foregoing third network element). The EIR in the 4G network interacts with the IWF network element through an S13/S13' interface, and the IWF network element interacts with the AMF network element through an N5g-eir interface. FIG. 8 is a schematic flowchart 3 of an identity verification method according to an embodiment of this application. The identity verification method is applicable to the foregoing communication system. In the scenario 2, the IWF network element may serve as a conversion function entity to convert first information used for verifying identity validity in a 5G network into second information used for verifying identity validity in a 4G network, to implement signaling conversion between networks of different standards. In a 5G standalone phase, a 4G network device may be used for verifying identity validity of a user equipment, so that no new device needs to be created, thereby reducing overheads.

Specifically, as shown in FIG. 8, a procedure of the identity verification method is as follows:
S801: The IWF network element receives an equipment identity check signaling message on an N5g-eir interface from an AMF network element.

An N5g-eir_Equipment Identity Check message may be signaling on the N5g-eir interface, and may be used for requesting to verify identity validity of a terminal.

S802: The IWF network element converts the equipment identity check signaling message on the N5g-eir interface into an ECR message.

The ECR message may be signaling on a 4G EIR equipment interface, and may be used for requesting to check validity of an IMEI, so as to verify the identity validity of the terminal. A process of converting the N5g-eir_Equipment Identity Check message to the ECR message relates to a rule of mapping between parameters in the N5g-eir_Equipment Identity Check message and the ECR message, and the rule of mapping between the parameters is shown in Table 3.

**Table 3: Rule of mapping between the parameters**

| Parameter in the N5g-eir_Equipment Identity Check message | Parameter in the ECR message | Descriptions |
|---|---|---|
| PEI | IMEI field in Terminal-Information | IMEI information |
| SUPI | User-NAME | User IMSI information |
| GPSI | None | The ECR does not have this information element, and conversion is not performed |
| supported-features | None | The ECR does not have this information element, and conversion is not performed |
| None | Software-Version in the Terminal-Information | When the PEI is the IMEISV, 15/16 digits are converted into an integer and assignment is performed |

It can be learned that the parameters in the N5g-eir_Equipment Identity Check message may specifically include the PEI, the SUPI, the GPSI, and the supported-features. For specific implementation, refer to related descriptions in S402. Details are not described herein again. The parameters in the ECR message may specifically include the IMEI field in the Terminal-Information, the User-NAME, and the Software-Version in the Terminal-Information. The IMEI field in the Terminal-Information is equivalent to the IMEI information, and the User-NAME may be the IMSI information. For specific implementation, refer to related descriptions in S402, and details are not described herein again. The ECR message does not have information elements corresponding to the GPSI and the supported-features. Therefore, the conversion is not needed. The Software-Version in the Terminal-Information can be a parameter that is not contained in the N5g-eir_Equipment Identity Check message. During signaling conversion, if the PEI is a software version of the device (IMEI software version, IMEISV), the 15/16 digits are converted into the integer, which is then assigned to the Software-Version in the Terminal-Information.

S803: The IWF network element sends the ECR message to the EIR in the 4G network.

Correspondingly, the EIR in the 4G network receives the ECR message, and verifies the identity validity of the terminal based on the parameters such as the Terminal-Information and the User-NAME carried in the ECR message. The EIR in the 4G network includes an identity validity verification result of the terminal in an ECA message, and sends the ECA message to the IWF network element.

S804: The IWF network element receives the ECA message returned by the EIR in the 4G network.

S805: The IWF network element converts the ECA message into an equipment identity check signaling response message on the N5g-eir interface.

The ECA message may be signaling on the 4G EIR equipment interface, or may be a response message for the ECR message. A process of converting the ECA message into the N5g-eir_Equipment Identity Check Response message relates to a rule of mapping between parameters in the ECA message and the N5g-eir_Equipment Identity Check Response message, that is, a rule of mapping between response parameters, as shown in Table 4.

**Table 4: Rule of mapping between the response parameters**

| Parameter in the N5g-eir_Equipment Identity Check Response message | Parameter in the ECA message |
|---|---|
| Eir Response Data::=Status: | Equipment-Status: |
| "WHITELISTED" | WHITELISTED (0) |
| "BLACKLISTED" | BLACKLISTED (1) |
| "GREYLISTED" | GREYLISTED (2) |

| Response code | |
|---|---|
| 200 ok | DIAMETER_SUCCESS(2001) |
| 404 Not Found ERROR_EQUIPMENT_UNKNOWN | DIAMETER_ERROR_EQUIPMENT_UNKN OWN (5422) |
| 504 Gateway Timeout TARGET_NF_NOT_REACHABLE | 3002 DIAMETER_UNABLE_TO_DELIVER |
| 503 Service Unavailable | 3004 DIAMETER_TOO_BUSY |

It can be learned that, the parameters in the N5g-eir_Equipment Identity Check Response message may specifically include the Eir Response Data::=Status:, the "WHITELISTED", the "BLACKLISTED", and the "GREYLISTED", which may respectively represent equipment status information, a whitelist, a blacklist, and a greylist of the terminal. The parameters in the ECA message may specifically include the Equipment-Status:, the WHITELISTED (0), the BLACKLISTED (1), and the GREYLISTED (2), which may respectively represent the equipment status information, the whitelist, the blacklist, and the greylist of the terminal, and have a correspondence with the parameters in the N5g-eir_Equipment Identity Check Response message. For specific implementation, refer to related descriptions in S402, and details are not described herein again.

In addition, the conversion between the N5g-eir_Equipment Identity Check Response message and the ECA message may further include conversion of the response code. Response code in the N5g-eir_Equipment Identity Check Response message may include: 200 ok, 404 Not Found (ERROR_EQUIPMENT_UNKNOWN), 504 Gateway Timeout (TARGET_NF_NOT_REACHABLE), and 503 Service Unavailable. For details, refer to descriptions in the scenario 1, and details are not described herein again. In the ECA message, a parameter corresponding to 200 ok is DIAMETER_SUCCESS (2001), indicating that the 4G EIR equipment performs processing normally. In the ECA message, a parameter corresponding to 404 Not Found is DIAMETER_ERROR_EQUIPMENT_UNKNOWN (5422), indicating an unknown equipment error. In the ECA message, a parameter corresponding to 404 Not Found is 3002 DIAMETER_UNABLE_TO_DELIVER, indicating that the 4G EIR equipment does not respond to an error in time. In the ECA message, a parameter corresponding to 503 Service Unavailable is 3004 DIAMETER_TOO_BUSY, and this error may be caused by system resource limitation, network congestion, a shutdown state of the 4G EIR equipment, or the like.

S806: The IWF network element sends, to the AMF network element, the equipment identity check signaling response message on the N5g-eir interface.

Correspondingly, the AMF network element receives the N5g-eir_Equipment Identity Check Response message, that is, receives the identity validity verification result of the terminal, to register the terminal with the 5G network.

It may be understood that the IWF network element may serve as the conversion function entity to convert the first information used for verifying the identity validity in the 5G network into the second information used for verifying the identity validity in the 4G network, to implement the signaling conversion between the networks of different standards. In the 5G standalone phase, the 4G network device may be used for verifying the identity validity of the user equipment, so that no new device needs to be created, thereby reducing the overheads.

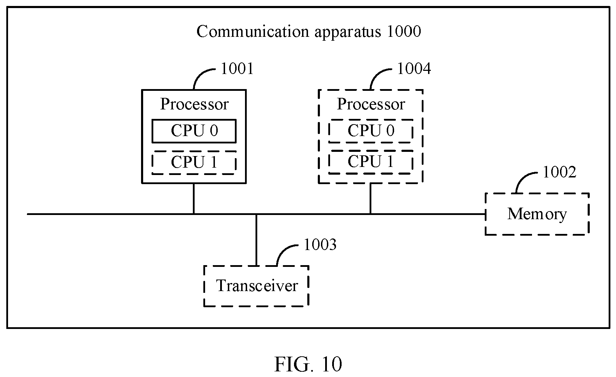

The foregoing describes in detail, with reference to FIG. 4 to FIG. 8, the methods provided in embodiments of this application. Communication apparatuses configured to perform the identity verification methods provided in embodiments of this application are described in detail below with reference to FIG. 9 and FIG. 10.

FIG. 9 is a diagram 1 of a structure of a communication apparatus according to an embodiment of this application. For example, as shown in FIG. 9, the communication apparatus 900 includes a transceiver module 901 and a processing module 902. For ease of description, FIG. 9 shows only main components of the communication apparatus.

The transceiver module 901 is configured to perform receiving and sending functions in the method shown in FIG. 4, and the processing module 902 is configured to perform a function in the method shown in FIG. 4 other than the receiving and sending functions.

Optionally, the transceiver module 901 may include a sending module (not shown in FIG. 9) and a receiving module (not shown in FIG. 9). The sending module is configured to implement a sending function of the communication apparatus 900, and the receiving module is configured to implement a receiving function of the communication apparatus 900.

Optionally, the communication apparatus 900 may further include a storage module (not shown in FIG. 9). The storage module stores a program or instructions. When the processing module 902 executes the program or the instructions, the communication apparatus 900 is enabled to perform a function of the terminal or the network device in the method shown in FIG. 4 in the foregoing methods.

It may be understood that the communication apparatus 900 may be a terminal or a network device, may be a chip (system) or another part or component that may be disposed in the terminal or the network device, or may be an apparatus that includes the terminal or the network device. This is not limited in this application.

In addition, for technical effects of the communication apparatus 900, refer to technical effects of the identity verification methods shown in FIG. 4 to FIG. 8. Details are not described herein again.

FIG. 10 is a diagram 2 of a structure of a communication apparatus according to an embodiment of this application. For example, the communication apparatus may be a terminal, or may be a chip (system) or another component or part that may be disposed in the terminal. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and/or the transceiver 1003. For example, the processor 1001 may be connected to the memory 1002 and/or the transceiver 1003 through a communication bus, may be connected to the memory 1002 and/or the transceiver 1003 through an intra-chip interface, or may be connected to the memory 1002 and/or the transceiver 1003 through another communication line. Optionally, the memory 1002 may be integrated with the processor 1001.

The following describes components of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing unit, CPU), or may be an application-specific integrated circuit (application-specific integrated circuit, ASIC), or is configured as one or more integrated circuits that implement embodiments of this application, for example, one or more microprocessors (digital signal processor, DSP), or one or more field programmable gate arrays (field programmable gate array, FPGA).

Optionally, the processor 1001 may perform various functions of the communication apparatus 1000 by running or executing a software program stored in the memory 1002 and invoking data stored in the memory 1002, for example, perform the identity verification method shown in FIG. 8.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store a software program for executing the solutions of this application, and the processor 1001 controls execution of the software program. For specific implementation, refer to the foregoing method embodiment. Details are not described herein again.

Optionally, the memory 1002 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), a magnetic disk storage medium, or another magnetic storage device, or any another medium that can be used to carry or store desired program code in the form of instructions or a data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is the terminal, and the transceiver 1003 may be configured to communicate with a network device or communicate with another terminal device. For another example, the communication apparatus 1000 is a network device, and the transceiver 1003 may be configured to communicate with a terminal or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000. This is not specifically limited in this embodiment of this application.

It may be understood that the structure of the communication apparatus 1000 shown in FIG. 10 does not constitute a limitation on the communication apparatus. An actual communication apparatus may include more or fewer parts than those shown in the figure, combine some parts, or have different part arrangement.

In addition, for technical effects of the communication apparatus 1000, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. An identity verification method, applied to a first network element, and comprising:
obtaining, by the first network element, first information in a process in which a terminal registers with a first network, wherein the first information is information used for verifying identity validity of the terminal in the first network;
sending, by the first network element, second information to a second network element based on the first information, wherein the second information is information used for verifying identity validity of the terminal in a second network, the first network and the second network are networks of different standards, and the second network element is configured to verify the identity validity of the terminal in the second network; and
obtaining, by the first network element, an identity validity verification result of the terminal from the second network element.

2. The method according to claim 1, wherein the first information comprises at least one of the following of the terminal: a first equipment identity or a first user identity, the first equipment identity is used for verifying equipment validity of the terminal in the first network, and the first user identity is used for verifying identity validity of a user who uses the terminal in the first network.

3. The method according to claim 2, wherein the first equipment identity comprises a permanent equipment identifier PEI, and the first user identity comprises a subscription permanent identifier SUPI.

4. The method according to any one of claims 1 to 3, wherein the second information comprises at least one of the following of the terminal: a second equipment identity or a second user identity, the second equipment identity is used for verifying equipment validity of the terminal in the second network, and the second user identity is used for verifying identity validity of the user who uses the terminal in the second network.

5. The method according to claim 4, wherein the second equipment identity comprises an international mobile equipment identity IMEI or terminal information, and the second user identity comprises user information or an international mobile subscriber identity IMSI.

6. The method according to any one of claims 1 to 5, wherein there is a correspondence between the first information and the second information.

7. The method according to claim 1, wherein the obtaining, by the first network element, the identity validity verification result of the terminal from the second network element comprises:
receiving, by the first network element, the identity validity verification result returned by the second network element based on the second information, wherein the identity validity verification result is used for representing whether an identity of the terminal in the second network is valid.

8. The method according to claim 7, wherein
if the identity of the terminal in the second network is valid, an identity of the terminal in the first network is also valid; or if the identity of the terminal in the second network is not valid, an identity of the terminal in the first network is not valid.

9. The method according to claim 8, wherein the obtaining the first information comprises:
receiving, by the first network element, the first information from a third network element, wherein the third network element is a network element in the first network; and
correspondingly, the method further comprises:
sending, by the first network element to the third network element, information indicating whether the identity of the terminal in the first network is valid.

10. The method according to any one of claims 7 to 9, wherein the identity validity verification result further indicates equipment status information of the terminal, and the equipment status information comprises that the terminal is in a whitelist, the terminal is in a blacklist, or the terminal is in a greylist.

11. The method according to any one of claims 1 to 10, wherein the first network comprises a 5G network, and the second network comprises a 2/3G network or a 4G network.

12. The method according to any one of claims 1 to 11, wherein the first information is borne in signaling on a 5G equipment identity register equipment interface, and the second information is borne in signaling on a 2/3G equipment identity register equipment interface or signaling on a 4G equipment identity register equipment interface.

13. An identity verification method, applied to a second network element, and comprising:
in a process in which a terminal registers with a first network, receiving, by the second network element, second information sent by a first network element based on first information, wherein the first information is information used for verifying identity validity of the terminal in the first network, the second information is information used for verifying identity validity of the terminal in a second network, and the first network and the second network are networks of different standards;
verifying, by the second network element, the identity validity of the terminal in the second network based on the second information; and
sending, by the second network element, an identity validity verification result of the terminal to the first network element.

14. A communication apparatus, wherein the apparatus comprises a module configured to perform the method according to any one of claims 1 to 13.

15. A communication apparatus, wherein the communication apparatus comprises a processor and a memory, the memory is configured to store computer instructions, and when the processor executes the instructions, the method according to any one of claims 1 to 13 is performed.

16. A computer-readable storage medium, wherein the computer-readable storage medium comprises a computer program or instructions, and when the computer program or the instructions are run on a computer, the computer is enabled to perform the method according to any one of claims 1 to 13.
